# EUROPEAN PATENT APPLICATION

(11) **EP 0 893 044 A2**
(43) Date of publication of application: **27.01.1999**
(21) Application number: 97308204.3
(22) Date of filing: 16.10.1997
(51) Int. Cl.: A01B 35/16

(54) **Cultivator**

(30) Priority: 16.10.1996 GB 9621595
(71) Applicant: Elliott, John Swift, Loddiswell near Kingsbridge South Devon (GB)
(72) Inventor: Elliott, John Swift, Loddiswell near Kingsbridge South Devon (GB)

(57) **Abstract**

There is provided a disc cultivator which comprises a first set of discs and a second set of discs in which the first set of discs are interleavable with the second set of discs characterised in that the gaps, e.g. less than about 15 cm, between adjacent discs of the each set are such as to encourage the jamming of soil to form a soil roller between the discs, and the overlap between the first and second sets of discs is adjustable, and in which one or both sets of discs preferably comprise a plurality of discs mounted on an axle having bearings at either end thereof, the discs being separated from one another by spacers, the discs and spacers being located on the axle separate from and between the bearings. This new form of disc cultivator may be used advantageously to produce a tilth, generally after one pass, suitable for the planting of a new crop. The depth of the tilth is determined by the degree of overlap of the two sets of discs and thus the diameter of the soil roller that can build up on the disc sets. The preferred arrangement of discs, spacers, axle and bearings permits easy maintenance, use of fret free bearings, discs mounted independently from the bearings, increases the strength of the axle and advantageously leaves no threads exposed to the elements.

## Description

### Field of the Invention

This invention relates to a soil cultivator, in particular for use in agriculture.

### Background of the invention

Following harvesting and where appropriate ploughing of soil, it is necessary to convert the soil to a condition suitable for receiving the seed of the chosen crop.

The process of reducing the soil to the required tilth is achieved in many ways. It can be accomplished by using 'one pass' cultivators which require considerable amounts of power, or by multiple operations of simpler implements including rollers, tine harrows, disc harrows, graders etc.

After ploughing the soil is laid out in furrows and is generally lumpy and uneven. The surface weeds and crop residues are ploughed under, and the land is worked into the required tilth preferably without bringing any residues back to the surface.

With customary forms of tine harrows, the soil is parted by dragging sprung or rigid tines through the soil. The soil is thus pushed/pulled forward and may or may not break into smaller pieces. Tine harrows all drag through the soil and are thus subject to friction and collect roots and plant material that are within their working depth. This material may break loose and cause unwanted plants and weeds to be spread widely across the field. Residues left on or near the surface also cause problems with the mechanical establishment of the next crop.

Disc harrows, by virtue of the rotation of their discs, do not drag material around the field and have less friction. Their dished shape first cuts into, and then lifts and throws the soil. Discs are spaced and provided with scrapers to ensure that soil does not jam in between them.

The leading set of discs cut grooves in the soil and the following set tend to fall into these grooves. The axial distance between the discs, even if the sets cut different paths, creates a corrugated profile of hard and soft soil beneath the tilth thrown from the discs. The dished discs cut lumps into smaller pieces but the distance between each disc is such that a sizeable lump can pass, intact, through the sets of discs

Dished discs have to be offset to the direction of travel, to provide the angle of attack necessary for them to cut and then throw the soil. The power requirement to achieve this action is considerable because axial thrust is generated and this has to be balanced by use of opposing sets of discs on separate axles. This thrust restricts the choice and reduces the life of the bearings which are generally mounted in between discs, near to, but not at, each end of the axles. This makes bearing installation difficult as the available gap restricts working space and it is difficult to use any bearing that requires adjustment to obtain accurate setup. As a result discs are generally mounted and collectively compressed between spacers, by tightening a large threaded nut at the end of the axle. Therefore any bearing that grips the axle, to avoid fretting and to resist axial thrust, will be axially loaded when the discs are axially tightened to keep them correctly spaced and secure. Consequently the system dictates the use of bearings with a sliding fit on the axle to allow the compression of the discs and spacers leading to fretting. To service the bearings when they are between discs requires the disruption of the disc setup, leading to the time consuming task of cleaning and resetting of the whole shaft.

Also with conventional dished disc cultivators turning at headlands is restricted by the distance between the axles of the opposed sets of discs. The effect is similar to the scuffing of tyres on multi-axle lorry trailers whilst turning sharply.

I have now devised a new improved form of disc cultivator which overcomes or diminishes the aforementioned disadvantages.

### Summary of the invention

Accordingly in a first aspect the present invention provides a disc cultivator which comprises a first set of discs and a second set of discs in which the discs of the first set are radially interleavable with the discs of the second set, characterised in that the gaps between adjacent discs of the first set are such as to encourage the jamming of soil to form a soil roller between the discs and the overlap between the first and second sets of discs is adjustable.

Typically the sets of discs are rotatable about axes which are at right angles to the direction of travel of the cultivator. For instance the sets of discs are mounted on axles having axes of rotation at right angles to the direction of travel of the cultivator. More preferably the or each axle is rotatably mounted on the cultivator, conveniently by two bearings, preferably one at either end of the axle.

Thus in preferred embodiments the invention provides a disc cultivator comprising sets of discs that have no axial thrust and are mounted on full width axles (e.g. over 3 metres in length), each with two substantial bearings. The sets of discs have no axial thrust because they are mounted on axles which are at right angles to the direction of travel and each disc is in equilibrium.

Conveniently the first set of discs are substantially planar, and especially lie in planes substantially parallel to the direction of travel of the cultivator. Characteristically the gaps between the discs of the first set are such as to encourage the jamming of soil to form a soil roller between the discs.

Preferably the second set of discs are of wavy profile; for instance, the axial displacement of the outer edge of each disc varies axially, e.g. about a fixed mid point around the circumference of the disc, e.g. varies sinusoidally. Most preferably the discs of the second set are shaped such that, when the two sets of discs are interleaved, the second set of discs profiles the soil roller retained by the first set of discs such the spaces between pairs of discs of the first set are configured as substantially U-shaped radial cross-section annular volumes.

Characteristically the distance between the axes, e.g. the axles, of the first and second sets of disc is adjustable.

Preferably the two sets of discs are arranged with similar gaps between adjacent discs so that they can radially overlap each other, without touching. This overlap, which is adjustable, gives a short axle base. Usually the second set of discs are mounted behind the first set of discs, i.e. with respect to the direction of travel of the cultivator. However, the second set of discs may be mounted in front of the first set of discs with respect to the direction of travel. The second set of discs is preferably provided with scrapers to prevent build up or trapping of soil between the discs of the second set interfering with the first set of discs. Preferably the sets of discs, the first set and preferably also the second set, are independently mounted on the axles. Preferably also each of the discs is separated by a spacer, e.g. tubular spacers.

Characteristically the gap between adjacent discs of the first set is narrower than prior art set-ups. For example, the gaps (i.e. axial distances) between adjacent discs of the first set are less than about 15 cm, preferably from about 8 to about 15 cm, especially from about 10 to about 13 cm, e.g. about 12 cm, in width (in comparison with prior art disc cultivators where adjacent discs are typically about 20 cm apart). This encourages the jamming of soil which usefully increases the weight to aid the penetration of the discs and provides a full width roller suitable for pressing the freshly ploughed furrows.

Radially engaging the plain and wavy disc set combination, profiles the soil jammed in between the plain discs, e.g. to a U shaped crossection. This shape is highly suitable for first slicing the soil with the discs and then crushing the soil by forcing it into the narrowing gap and U bottom of this disc-roller combination. This crushing occurs to a lesser extent even if the roller has not formed, because the soil is cut, compressed and fractured between the closely spaced discs. If the second set of wavy discs are fully overlapped with the first set of discs, no soil will remain jammed. By adjusting the overlap between the sets of discs, the depth of the U is altered, giving positive control of the depth of soil that is able to enter the plain discs and thus advantageously controlling the depth of the tilth produced, whatever the soil type or conditions. A separate system is required to keep the soil jammed in the rear wavy discs from forming a soil roller of large enough diameter to cause the two rollers to obstruct one another; this is typically an adjustable scraper between each disc. The setting of this scraper can also determine the depth of working should the front roller be unformed.

The cultivator of the first aspect of the invention provides a system where soil is cut by the first set of discs into narrow strips, it enters the narrowing gap between the discs where it is jammed, causing some fracturing and is then crushed by the U bottom when formed. This jammed soil is then carried round by the rolling discs until it reaches the point of radial overlap with the second roller. Here it is met by a disc rotating in the opposite direction causing it to crumble, disintegrate and drop out, leaving the plain disc to continue round with the U shape formed ready for the next soil. The soil trapped between these discs is, in effect, in a box with only the lowest side open. The closed faces being, on the inside the soil roller, the discs at each side, the incoming soil and the disc travelling in the opposite direction. This containment ensures the fracturing of the soil to a tilth. The fallen soil is now subjected to the same treatment by the rear discs but is typically removed by a scraper to finally fall to the ground as well broken tilth. It will be appreciated that the disc sets pick up the full width of soil, carpet like, compared to the strips of soil cut and thrown by traditional dished discs. The tilth produced is suitable for grading should a totally level seed bed be required. Subsequent passes with the machine create finer tilthes but only work to the depth previously selected, so no fresh soil or debris are introduced.

The roller formed between the front discs is highly suitable for spreading and carrying the weight of other implements that may or may not require depth control, especially the down force from implements designed to lift the soil.

As previously described the cultivator of the present invention has an independent mounting and holding systems for the discs and bearings. To separately mount the discs I have devised a system that has no screw threads exposed to the elements, increases the strength of the axle, permits the use of wider axles and allows the discs on one axle to be compressed in typically two separate sets.

Accordingly in a further aspect the invention provides a disc cultivator assembly comprising a plurality of discs mounted on an axle having bearings at either end thereof, the discs being separated from one another by spacers, the discs and spacers being located on the axle separate from and within the space between the bearings.

Preferably the discs and spacers are located on a boss which is non-rotatably located on the axle between the bearings. Conveniently the fixed boss carries one or more axial studs which are preferably threaded at their outer ends and which pass through the discs and spacers thereby locating the discs and spacers on the axle.

In a preferred embodiment of this aspect of the invention the one or more axial studs carry threaded connectors at the free ends thereof and are of length sufficient to carry all but the outermost disc. Conveniently the outermost disc is compressively located on the axle by means of one or more threaded bolts which pass through the outermost disc and engage with the threaded connectors. Conveniently also the threaded connector at the free end of the one or more axial studs is locked in position, e.g... prevented from rotating, when the outermost spacer and disc are located on the axle. Advantageously the fixed moveable boss is located approximately half way between the ends of the axle and has two sets of one or more axial studs extending therefrom towards both of the outer ends of the axle to carry two separate sets of discs and spacers.

In an alternative preferred embodiment the one or more axial studs may pass through and extend to just beyond the outermost disc and be provided with domed nuts to compressively locate the discs and spacers on the axle, and further may be provided with one or more locked nuts which engage with the outer spacer and prevent twisting of the studs during tightening of the disc sets.

Preferably the cultivator of the first aspect of the invention comprises a cultivator assembly according to the second aspect of the invention.

The sets of discs are mounted on the axles with a system that allows their easy removal, increases the strength of the axle and leaves no threads exposed to the elements.

The bearings are at each end of the full width axles and thus may be protected from exposure to the cultivated soil, e.g. by the chassis frames. The outer side of the housing may be blanked off, reducing the number of seals exposed to the elements. The end access facilitates the installation and maintenance of the bearings without interfering with the discs. This access, and the discs having an independent mounting system, enables fret free mounting systems, like tapered sleeves, to be used between the axle and bearing. The requirement for only two bearings for the full width axles gives simplicity, economy and greater machine width per bearing, as compared with conventional systems with double the number of bearings and four times the number of seals. The lack of axial thrust permits the use of axles and bearings with high radial load capability, e.g. long life spherical roller bearings. This high load carrying capacity allows the carrying of, additional weights to obtain deeper soil penetration in very hard conditions, implements such as drills, and the downforce from sub soiling equipment, without compromising bearing life

Thus in a specific embodiment of the first and second aspects of the invention the axle has a bearing spigot/journal at each end. Approximately halfway between these ends is a moveable fixed boss. The width of this boss can be packed to equal that chosen/required for the discs and typically has the same outside diameter as the spacers between the discs. From each side of this boss, studs run out towards the axle ends. Discs with holes to match the studs and tubular spacers are alternatively fed onto the studs. The inner diameter of the tubular spacers is such that they encase the studs to protect them from the elements. When compressed the spacers effectively increase the diameter of the axle and thus its strength. The studs are long enough to allow all but the outermost disc to be mounted and compressed by nuts on the studs. The nuts are tightened against a suitable washer packer, to compress the set of mounted discs and spacers. The studs are terminated with a threaded female connector. The inside diameter of the spacer for the outermost disc slides over the nuts flats, such that the connectors and nuts are unable to turn on the studs. The outer disc is placed on the axle. A thick washer of similar outside diameter to the spacers, with holes to match the discs, is moved up to the disc. The holes of the disc and washer are aligned to the female thread of the previously described connector. Bolts are fed through to engage in the connectors and the bolts are tightened to fully compress and secure the disc set. The torque from the tightening of the bolts cannot twist the studs, as the nuts and connectors are prevented from turning by the spacer. The thick outer washer can if necessary be fixed in place by a locking device, such as a taper lock, to ensure the disc set does not wind round the axle. Any winding that does occur would increase the compression of the disc set, by effectively shortening the studs. This procedure is repeated for the other set of discs to be mounted on this axle, advantageously giving two independently mounted sets. The gap between each disc could be varied by altering the length of each packer, alternatively, because the complete disc set, axle and bearings can be quickly attached to the machines frame with two bolts for each bearing, it is envisaged that sets of discs with different spacings would be kept for specific tasks and conditions.

In alternative embodiments the studs extend just beyond the outermost disc, and domed nuts are used to compressively secure the outermost disc on the studs. or the discs may be in one or more sets and the studs would pass through a boss which is non rotatably located on the axle.

Such systems allow wider arrays of discs to be mounted between bearings than prior art systems, and may be used for mounting sets of dished discs on conventional machines. The bearings may be chosen to cope with the axial load. Dished discs may conveniently have a fret free mounting on the shaft and advantages as described above for the non-dished roller disc system.

It will be appreciated that systems using more than two overlapping disc sets of various shaped discs could be assembled for specialised tasks and power could be transmitted to one or more sets of the discs; for instance, to ensure that the discs rotate in difficult conditions, or to assist with the travel of the tractor.

### Description of the drawings

The invention is now further described by way of illustration only with reference to the accompanying drawings in which:

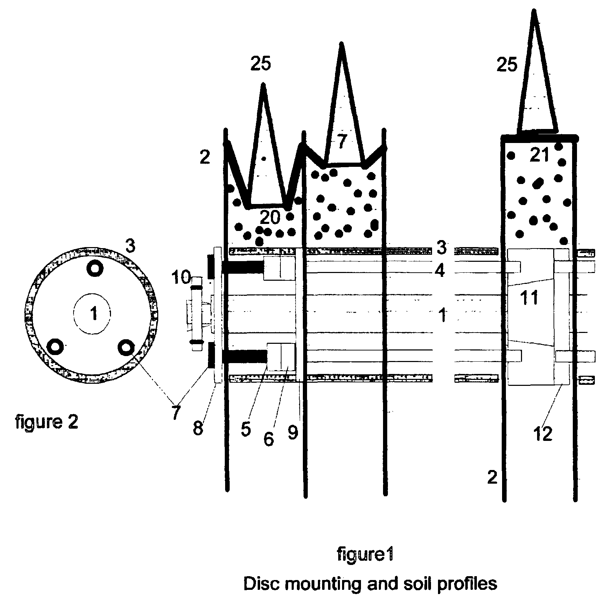

Figure 1 is a top view of a cultivator and disc assembly of the invention;
Figure 2 is an axial end view of a vertical plane through a disc cultivator assembly of the invention;

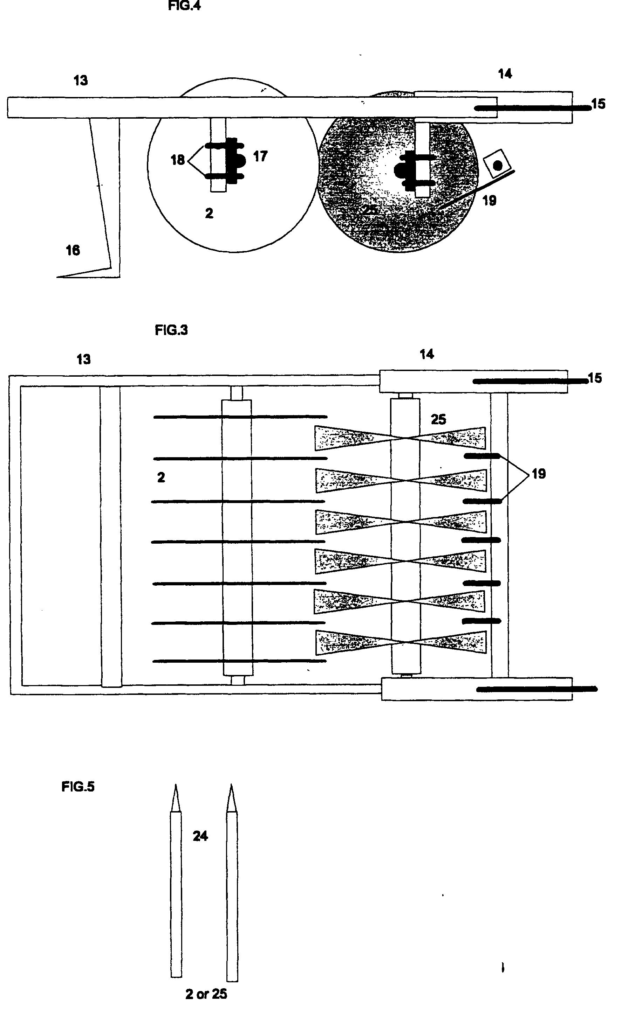

Figure 3 shows an alternative plan view from above of a cultivator of the invention including a frame for attachment to a tractor;
Figure 4 shows a side elevation view of the cultivator shown in Figure 3;

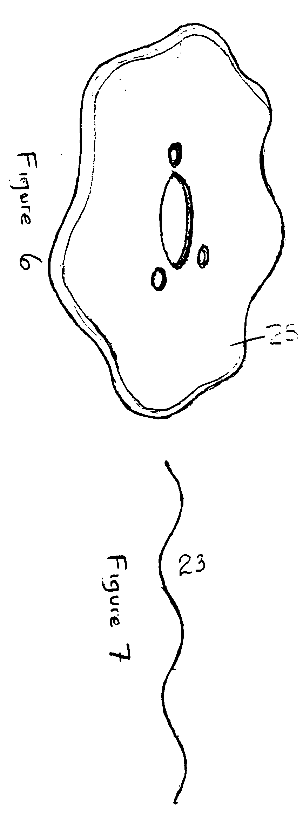

Figure 5 shows a partial view from above of the outer portions of a pair of adjacent discs;
Figure 6 shows a perspective view of a wavy disc, and
Figure 7 shows the track left by a single wavy disc.

### Description of the Invention

The tubular main shaft 1 , is rotatably mounted on two end bearings 10. The moveable fixed boss 11 is locked in a near central position and packed to the common disc gap by attached spacer 12. Studs 4 are fixed to each side of this boss/spacer and receive discs 2 and spacers 3 until all but the outermost discs are mounted. The spacers 3 are of length 12 cm. Washer 9 is placed against the penultimate disc and nuts 6 are tightened to compress washer 9 and all the discs and spacers mounted on the studs 4. A long connector nut 5 is locked onto nut 6 with their flats positioned to lock against the inner diameter of the outer spacer, and with some thread available to receive the bolts 7. The outer spacer is slid over the locked nuts 5 and 6 and the outer disc and a washer 8 with similar holes to the discs 2, are aligned to the available female thread of the locked nuts 5 and 6. Bolts 7 are inserted through these aligned holes and fully tightened to form a compressed tube of spacers and gripped discs with gaps of 12cm between adjacent discs. No threads are left exposed to the elements. The bearings 10 are secured to the shaft ready for bolting to the chassis frames 13 and 14. A sharpening of the discs around their circumferences produces a narrowing gap from the point to full thickness for compressing the soil to grip, lift, and fracture it 24 .The profiles of the jammed soil 20 and 21 can be altered by engaging the wavy discs 25 to varying depths. A roller is formed at position 21 and a U shape at position 20. The depth of the wavy disc 25 is typically altered by adjusting the screw 15 between the two sliding frames 13 and 14. The bearing housings 17 are attached by two bolts 18 to these frames in such a way that when the frames are lifted they leave a complete disc set and bearings sitting on the ground. A tool 16 is illustrated in front of the leading discs 2 to indicate how the discs may be used to support a tool that may need depth control, and e.g. also benefit from a tool that will pull the discs into the ground where weight alone would be inadequate to obtain the required depth of penetration. A single wavy disc 25 would leave a wavy line 23 when rolled along the ground . The soil jammed between the wavy discs is scraped clean to whatever depth the tongue/scrapers 19 dictate.

In an alternative version (not shown), the studs 4 extend to just beyond the outermost disc 2. A washer 8 with similar holes to the discs 2, is aligned to the protruding ends of the studs 4 and domed nuts are fitted to these protruding ends and tightened to form a compressed tube of spacers and gripped discs.

## Claims

1. A disc cultivator which comprises a first set of discs and a second set of discs in which the first set of discs are interleavable with the second set of discs characterised in that the gaps between adjacent discs of the first set are such as to encourage the jamming of soil to LIFT A CARPET OF SOIL AND form a soil roller between the discs and the overlap between the first and second sets of discs is adjustable.

2. A cultivator according to claim 1, in which the sets of discs are rotatable about axes which are at right angles to the direction of travel of the cultivator.

3. A cultivator according to claim 1 or 2, in which the sets of discs are mounted on axles having axes of rotation at right angles to the direction of travel of the cultivator.

4. A cultivator according to claim 3 in which the or each axle is rotatably mounted on the cultivator, conveniently by 2 bearings, preferably one at either end of the axle.

5. A cultivator according to any one of the preceding claims, in which the gaps between the adjacent discs of the first set of discs are from about 8 to about 15 cm in width.

6. A cultivator according to any one of the preceding claims in which the first set of discs are substantially planar and preferably lie in planes substantially parallel to the direction of travel of the cultivator.

7. A cultivator according to any one of claims 3 to 6, in which the discs are independently mounted on the axles.

8. A cultivator according to claim 7 in which the discs are separated by spacers, e.g. tubular spacers.

9. A cultivator according to any one of the preceding claims in which the second set of discs are mounted behind the first set of discs.

10. A cultivator according to any one of the preceding claims in which the second set of discs are of wavy profile, e.g. sweep out a substantially U-shaped radial cross-section annular volume on rotation.

11. A cultivator according to any one of the preceding claims in which the second set of discs is provide with scrapers or other means to prevent soil jamming in the second set of discs from interfering with the first set of discs.

12. A disc cultivator assembly comprising a plurality of discs mounted on an axle having bearings at either end thereof, the discs being separated from one another by spacers, the discs and spacers being located on the axle separate from and between the bearings.

13. A cultivator assembly according to claim 12, in which the discs and spacers are located on a boss which is non-rotatably located on the axle between the bearings.

14. A cultivator assembly according to claim 13, in which the fixed boss carries one or more axial studs which pass through the discs and spacers and thereby locate the discs and spacers on the axle.

15. A cultivator assembly according to claim 14, in which the one or more axial studs carry threaded connectors at the free ends thereof and are of length sufficient to carry all but the outermost disc.

16. A cultivator assembly according to claim 15, in which the outermost spacer and disc are compressively located on the axle by means of one or more threaded bolts which pass through the outermost spacer and disc and engage with the threaded connectors.

17. A cultivator according assembly to claim 14, in which the one or more axial studs extend to just beyond the outermost disc and are fitted with *domed* nuts.

18. A cultivator assembly according to claim 15, 16 or 17, in which the one or more axial studs is locked in position/prevented from rotating when the outermost spacer and disc are located on the axle.

19. A cultivator assembly according to any one of claims 13 to 18, in which the fixed moveable boss is located approximately half way between the ends of the axle and has two sets of one or more axial studs extending therefrom towards both of the outer ends of the axle to carry two separate sets of discs and spacers.

20. A cultivator according to any one of claims 1 to 11 comprising a cultivator assembly according to any one of claims 12 to 19.
